# EUROPEAN PATENT APPLICATION

(11) **EP 1 439 149 A2**
(43) Date of publication of application: **21.07.2004**
(21) Application number: 04000600.9
(22) Date of filing: 14.01.2004
(51) Int. Cl.: C03B 33/09, C03B 33/04

(54) **Method for manufacturing a glass blank**

(30) Priority: 17.01.2003 JP 2003010217
(71) Applicant: Murakami Corporation, Shizuoka-shi, Shizuoka, 422-8569 (JP)
(72) Inventor: Hanada, Takehisa, Fujieda-shi Shizuoka 426-8601 (JP)
(74) Representative: Dallmeyer, Georg, Dipl.-Ing.

(57) **Abstract**

The present invention relates to a method for manufacturing a glass blank having a predetermined contour from a plate glass. In this method, first, the plate glass PG is scored with an outline OL surrounding a part GB to be the glass blank. Next, the plate glass is scored with cutting lines CL connecting the outline with the outer edge of the plate glass. Thereafter, the plate glass is substantially horizontally supported such that only the inner part inside the outline is kept into contact with a support and the other part is floated. Finally, the plate glass is broken along the cutting lines and the outline by blowing hot air onto the outline and the outline to generate thermal stress on the plate glass along the cutting lines and the outline. Thus, the glass blank of which the edge is flawless is obtained.

## Description

### BACKGROUND OF THE INVENTION

### Technical Field

The present invention relates to a method for manufacturing a glass blank having a desired contour from a plate glass.

### Related Background Art

As a method for manufacturing a glass blank having a desired contour from a plate glass, the following method has been heretofore commonly employed. First, the surface of the plate glass is scored with an outline of the glass blank and a plurality of cutting lines extending from this outline to the outer edge of the plate glass by use of a glass cutter such as a diamond wheel. Next, one of a plurality of outer parts defined by the cutting lines and the outline is grasped to break the outer part from the other parts. Thus, the glass blank having a desired contour is finally obtained.

However, the above method has a problem that when breaking the plate glass along the lines scored on the surface of the plate glass, flaws such as chips or cracks may occur on the outline or the edge of the glass blank. It is presumed that such flaws occur because the outer parts of the plate glass grasped by a tool or by hand interfere with the edge of the glass blank during or immediately after the breaking.

Furthermore, a method for manufacturing a glass blank as disclosed in Japanese Patent Laid-Open Publication No. Sho 54-106524 is also known. In this method, after scoring the surface of a plate glass with an outline of the glass blank and a plurality of cutting lines as described above, a laser beam is irradiated on the plate glass along these cutting lines and outline, and the plate glass is broken with thermal energy of this laser beam to manufacture the glass blank.

However, in this method, an expensive facility such as a laser beam irradiation apparatus is required.

Consequently, an object of the present invention is to provide a method for manufacturing a glass blank, in which flaws such as chips or cracks which may otherwise occur on the edge of the glass blank can be prevented and the manufacture can be performed by use of an inexpensive facility or apparatus.

### Summary of the Invention

In order to attain the above-described object, according to the present invention, a method for manufacturing a glass blank having a predetermined contour from a plate glass comprises a first step of scoring the plate glass to form an outline surrounding a part to be the glass blank, a second step of scoring the plate glass to form one or more cutting lines connecting the outline with the outer edge of the plate glass, a third step of substantially horizontally supporting the plate glass such that only the part inside the outline is kept into contact with a support and the other part is floated, and a fourth step of blowing hot air onto the outline and the cutting lines to generate thermal stress on the plate glass along the cutting lines and the outline and thereby breaking the plate glass along the cutting lines and the outline.

According to this method, in the fourth step, that is, in the step of blowing hot air, the part of the plate glass inside the outline is supported generally horizontally and the other part is floated. Therefore, on the outer part outside the outline to be removed, weight of the outer part itself and wind force of the hot air are exerted. Accordingly, when thermal stress is generated on the plate glass along the cutting lines and the outline to break the plate glass, the outer part of the plate glass is naturally separated along the outline. As a result, the glass blank having a desired contour is obtained and flaws such as chips or cracks which may otherwise occur on the outline of the glass blank are prevented.

Furthermore, means for scoring the cutting lines and the outline, means for blowing hot air on the cutting lines and the outline and means for supporting the plate glass are relatively inexpensive, so that a facility or an apparatus for carrying out the method of the present invention can be made inexpensive.

Preferably, in the second step, a plurality of the cutting lines are scored.

Preferably, in the first step, the plate glass is scored with the outline by a glass cutter.

Preferably, in the second step, the plate glass is scored with the cutting lines by a glass cutter.

Preferably, in the third step, the plate glass is sucked and supported by an air chuck which sucks the part used as the glass blank.

Preferably, in the fourth step, the hot air blown has a temperature within the range of 300 to 700°C.

These and other features and advantages of the present invention will become apparent to those skilled in the art from the following detailed description by referring to the accompanying drawings.

### Brief Description of the Drawings

FIG. 1 is a perspective view of a plate glass where the method for manufacturing a glass blank according to one embodiment of the present invention is applied.

FIG. 2 is a side view schematically showing an apparatus for use in the method for manufacturing a glass blank according to one embodiment of the present invention.

FIG. 3 is a schematic view showing a state where the glass blank in FIG. 1 is manufactured.

FIG. 4 is a plan view of the plate glass, showing a modified example of the cutting lines shown in FIG. 1.

FIG. 5 is a plan view of the plate glass, showing another modified example of the cutting lines shown in FIG. 1.

FIG. 6 is a plan view of the plate glass where the method for manufacturing a glass blank according to another embodiment of the present invention is applied.

FIG. 7 is a schematic view showing another order for blowing hot air onto the plate glass of FIG. 1.

### Best Mode for Carrying Out the Invention

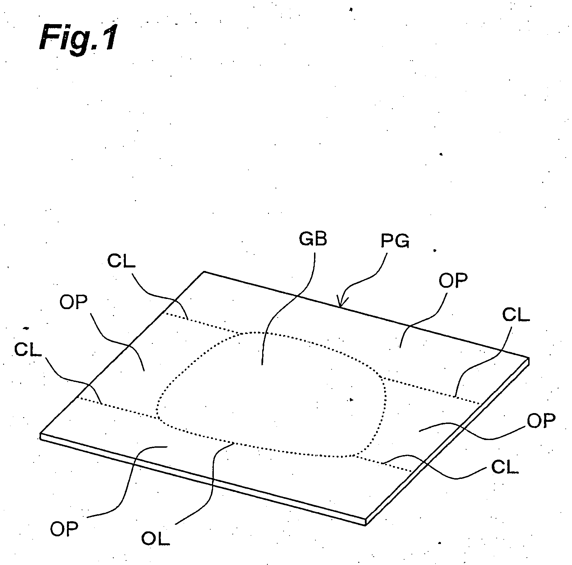

Referring now to the drawings, like reference characters designate like or corresponding parts throughout the several views. FIG. 1 shows a perspective view of a plate glass where the method for manufacturing a glass blank according to one embodiment of the present invention is applied. A plate glass PG shown in the figure is flat and rectangular. From this plate glass, a glass blank GB having a predetermined contour for manufacturing a door mirror of a car is obtained. It should be noted that the shape of the plate glass applied to the present invention is not limited to the one shown in the figure and its use is not also limited to the use in the door mirror.

Briefly, the method according to the present embodiment comprises a first step of scoring the surface of the plate glass PG with an outline OL surrounding a part to be the glass blank GB by use of a glass cutter not shown, a second step of scoring the surface of the plate glass PG with at least one cutting line CL connecting this outline OL and the outer edge of the plate glass PG by use of a glass cutter, a third step of supporting the plate glass PG, and a fourth step of blowing hot air on each cutting line CL and the outline OL to generate thermal stress on the plate glass PG along each cutting line CL and the outline OL.

The step of forming the outline OL can be performed by commonly known means. For example, a scoring apparatus having a copying mechanism or an XY drive mechanism (not shown) can be suitably used. The apparatus having the copying mechanism or tracer comprises a support for horizontally supporting the plate glass PG, and a glass cutter disposed above the support and movable in a horizontal direction, wherein the glass cutter is moved after a desired shape by the copying mechanism. The another scoring apparatus, having the XY drive mechanism, comprises a support capable of horizontally supporting the plate glass PG and movable in a horizontal direction or an XY direction, and a glass cutter fixed above the support, wherein the support is moved in a horizontal direction by the XY drive mechanism. In any of the apparatus, the plate glass PG supported on the support can be controllably moved in the horizontal direction relative to the glass cutter, whereby the desired outline OL which is a closed curve is scored on the upper surface of the plate glass PG. Alternatively. this step may be performed manually.

The step of forming the cutting line CL can be performed by hand or by other commonly known means, preferably by the above-described apparatus. For example, the plate glass PG supported on the above-described support in the outline forming step is sequentially moved horizontally relative to the glass cutter, whereby the surface of the plate glass PG can be scored with a plurality of cutting lines CL. Each of the cutting lines CL is preferably a straight line extending from the outline OL to the outer edge of the plate glass PG. In the embodiment shown in FIG. 1, four cutting lines CL are formed and four outer parts OP to be removed are defined by these cutting lines CL and the outline OL.

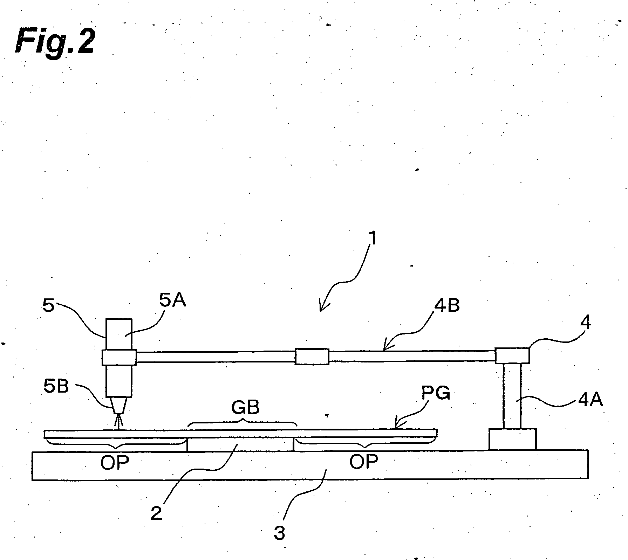

Referring now to FIG. 2, which shows a glass blank manufacturing apparatus 1 for use in the step of supporting the plate glass PG and the step of blowing hot air. The apparatus 1 has an air chuck 2 as a means for supporting the plate glass PG shown in FIG. 1. The air chuck 2 has an upward supporting surface which comes in contact with only a lower surface or rear surface of a part to be the glass blank GB in the plate glass PG. A large number of small holes are formed on the supporting surface, and a pressure reducing device (not shown) such as a suction pump is communicated with these small holes. Therefore, the plate glass PG is sucked on the supporting surface of the air chuck 2 by actuating the pressure reducing device.

The air chuck 2 is provided on the upper surface of a table 3 such that its supporting surface is substantially horizontal. An arm unit 4 is provided on the upper surface of the table 3.

The arm unit 4 has a shaft 4A extending substantially in the vertical direction from the table 3 and an arm 4B of which the proximai end is fixed to the shaft 4A. The arm 4B can be expanded and contracted to allow its total length to be remotely controlled. Further, the shaft 4A is rotatable around its axis, and is rotated by a drive source (not shown). Accordingly, by controlling the rotation of the shaft 4A and the expansion and contraction of the arm 4B, the distal end of the arm 4B can be moved substantially in the horizontal direction while maintaining substantially the same height.

A hot air generator 5 is held at the distal end of the arm 4B. The hot air generator 5 has a casing 5A with a built-in heater (not shown). The casing 5A is held substantially vertically at the distal end of the arm 4B. A nozzle 5B for ejecting hot air is provided at the bottom end of the casing 5A, and the nozzle 5B is spaced at a distance of, for example, 2 mm with respect to the upper surface of the plate glass PG supported by the air chuck 2. The casing 5A is constructed such that compressed air is supplied from a compressor (not shown). Accordingly, when a heater is energized and compressed air is supplied from the compressor into the casing 5A, high-temperature air heated by the heater is ejected downward from the nozzle 5B. The hot air generator 5 as shown is constructed such that a set temperature of the heater itself is, for example, 700°C and air heated to about 450°C by this heater is ejected from the nozzle 5B at a pressure regulated to about 0.3 MPa by a regulator (not shown). Note that the hot air generator 5 may be the one housing a blower within the casing 5A in place of the compressor.

As described above, the hot air generator 5 is held at the distal end of the arm 4B which is horizontally movable. Therefore, by controlling the arm unit 4, the generator can be moved in an arbitrary direction along the upper surface of the plate glass PG in a state where the nozzle 5B is about 2 mm above the upper surface of the plate glass PG. Alternatively, the arm unit 4 may be manually actuated. Note that the mechanism which holds and drives the hot air generator 5 is not limited to the arm unit 4 shown in FIG. 2.

Using such an apparatus 1, first, the plate glass PG shown in FIG. 1 having the outline OL and the cutting lines CL formed thereon rests on the supporting surface of the air chuck 2 in the outline apparatus 1 such that the outline OL and the cutting lines CL are oriented upward. Then, the position of the plate glass PG is adjusted such that the supporting surface of the air chuck 2 is positioned immediately under only the inner part GB inside the outline OL without projecting outside the outline OL. Thereafter, the plate glass PG is sucked by the air chuck 2 so as to be supported substantially horizontally.

Next, air heated to about 450°C and ejected at a pressure of about 0.3 MPa from the nozzle 5B of the hot air generator 5 is blown onto the respective cutting lines CL and the outline OL of the plate glass PG by controlling the arm unit 4. More specifically, first, one of the cutting lines CL is selected. Then, hot air is blown onto outer end of the selected cutting line on the side of the outer edge of the plate glass PG, and is intermittently moved or continuously moved at a low speed along the selected cutting line, from the outer end to an intersection point between the outline OL and the selected cutting line. A time of blowing hot air on the same place may be set within 15 seconds, for example, about 10 seconds. Thus, the plate glass PG is broken along the selected cutting line CL by thermal stress.

Subsequently, another cutting line CL adjacent to the above-described cutting line CL is broken with hot air in the same manner.

After the hot air blow onto all of the cutting lines CL is completed, the hot air is blown onto the outline OL, and moved along the whole outline OL. As a result, the plate glass PG is broken along the outline OL by thermal stress.

It should be noted here that the plate glass PG is supported by the air chuck 2 only in the inner part inside the outline OL and the other part is spaced from the table 3 with floating. Therefore, on each of the outer parts OP surrounded by the cutting lines CL and the outline OL onto which hot air is blown, weight of the outer part OP itself is exerted. Further, wind force (pressure) of the hot air which is blown from the nozzle 5A of the hot air generator 5 acts on the outer part OP. That is, in the plate glass PG, thermal stress due to hot air is generated along the cutting lines CL and the outline OL, and additionally, a downward load (weight of the each outer parts OP and wind force of hot air) is exerted on each outer part OP. Accordingly, in the hot air blowing step according to the shown embodiment, the outer parts OP around the glass blank GB in the plate glass PG are smoothly broken from the cutting lines CL and the outline OL to thereby prevent the broken outer parts OP from contacting again the glass blank GB. As a result, flaws such as chips or cracks which may occur on the outline OL of the glass blank GB are prevented.

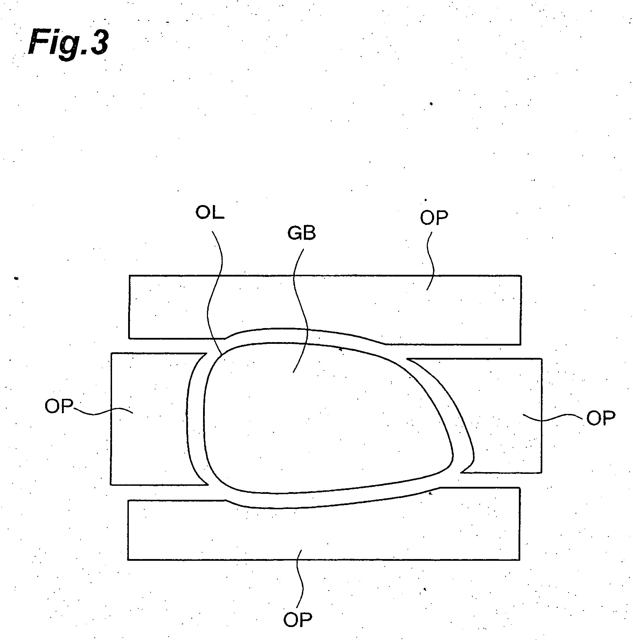

In this manner, an excellent glass blank GB of which the edge is flawless is manufactured (see FIG. 3).

As described above, the method for manufacturing the glass blank according to the present embodiment uses, for example, the glass cutter for scoring the plate glass PG with the cutting lines CL and the outline OL, the hot air generator 5 for blowing hot air onto the cutting lines CL and the outline OL, and the air chuck 2 for supporting generally horizontally a part to be the glass blank GB. Since any of these is inexpensive, it is possible to reduce the equipment cost. Further, since these tools or apparatus are easily handled, the glass blank can be easily manufactured.

In addition, the present invention is not limited to the above-described embodiment.

For example, the temperature of the hot air in the hot air blowing step is appropriately set according to the material or thickness of the plate glass used. Typically, it may be, for example, between 300 and 700°C. Further, the ejection pressure of hot air can also be appropriately changed.

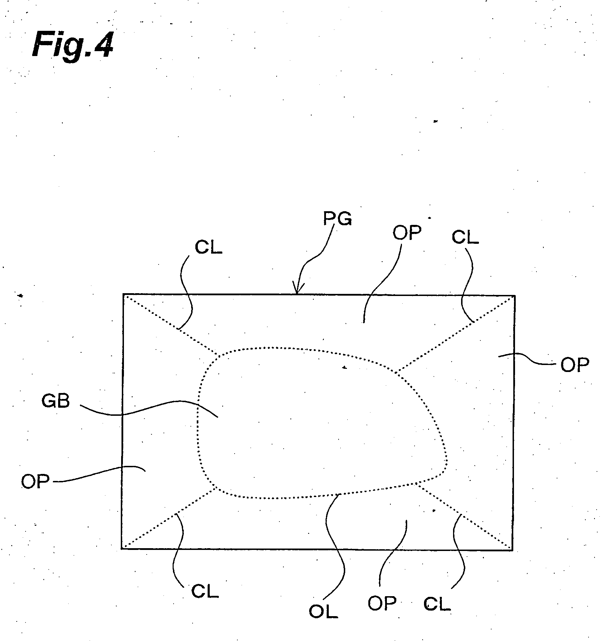

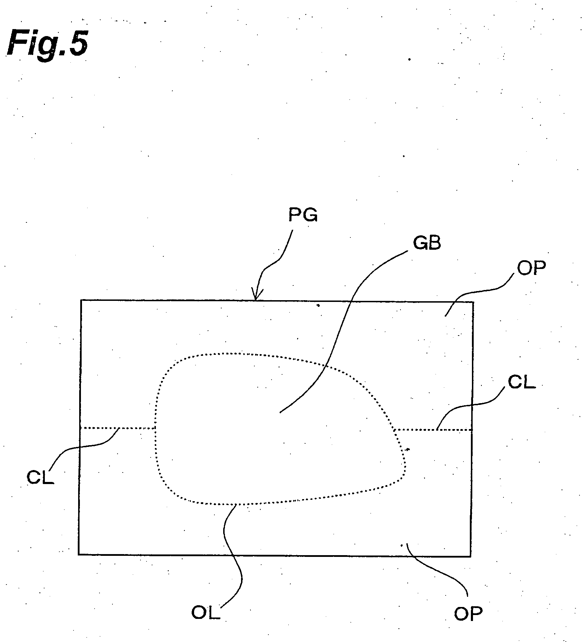

The position and number of the cutting lines CL formed in the cutting line forming step are not limited to those shown in FIG. 1. For example, as shown in FIG. 4, four cutting lines CL may be formed in a position along diagonals of the plate glass PG. Further, as shown in FIG. 5, two cutting lines may be formed in a position along the longitudinal direction of the plate glass PG.

The apparatus 1 for use in the hot air blowing step may be the one having a plurality of hot air generators 5. In the case of having two hot air generators 5, it is preferable that the respective hot air generators 5 are operated so as to take a position symmetrical to each other.

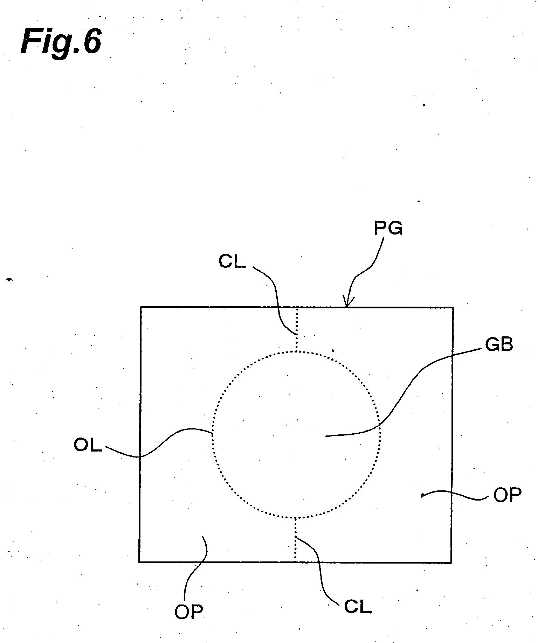

The glass blank manufactured according to the present invention is not limited to the one for use in a door mirror. For example, as shown in FIG. 6, the present invention can also be applied to a method for cutting out a circular glass blank GB for use in a dental mirror from a rectangular plate glass PG.

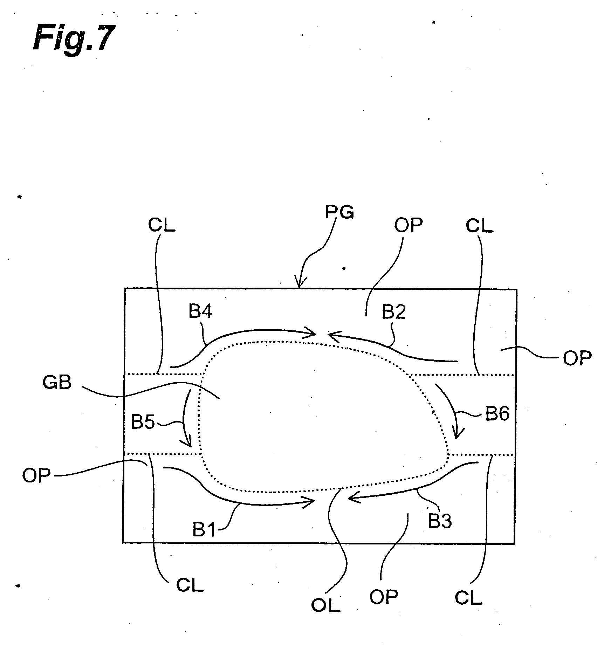

Furthermore, the order for blowing hot air onto the glass plate is not limited to the above-described embodiment. For example, the hot air may be blown onto the cutting lines CL, after the hot air blow onto the outline CL is completed. Alternatively, in the order and directions of the arrows B1, B2, B3, B4, B5 and B6 as shown in FIG. 7, the hot air may be blown onto the outline OL and the cutting lines CL.

It is thought that the present invention and many of its attendant advantages will be understood from the foregoing description and it will be apparent that various changes may be made in the form, construction and arrangement thereof without departing from the spirit and scope of the invention or sacrificing all of its material advantages.

## Claims

1. A method for manufacturing a glass blank having a predetermined contour from a plate glass, said method comprising:
a first step of scoring said plate glass to form an outline surrounding a part to be said glass blank;
a second step of scoring said plate glass to form at least one cutting line connecting said outline with the outer edge of said plate glass;
a third step of substantially horizontally supporting said plate glass such that only said inner part inside said outline is kept into contact with a support and the other part is floated; and
a fourth step of blowing hot air onto said outline and said at least one cutting line to generate thermal stress on said plate glass along said cutting line and said outline, thereby breaking said plate glass along said cutting line and said outline.

2. The method as claimed in claim 1, wherein in said second step, a plurality of the cutting lines are scored.

3. The method as claimed in claim 1, wherein in said first step, said plate glass is scored with said outline by use of a glass cutter.

4. The method as claimed in claim 1, wherein in said second step, said plate glass is scored with said cutting line by use of a glass cutter.

5. The method as claimed in claim 1, wherein in said third step, said plate glass is sucked and supported by an air chuck which sucks said part to be said glass blank.

6. The method as claimed in claim 1, wherein in said fourth step, the hot air blown has a temperature within the range of 300 to 700°C.
